Europäisches Patentamt

European Patent Office

Office européen des brevets

(19)

(11) EP 0 930 753 A2

(12) EUROPÄISCHE PATENTANMELDUNG

(43) Veröffentlichungstag:
21.07.1999 Patentblatt 1999/29

(51) Int Cl.⁶: H04L 27/26

(21) Anmeldenummer: 99810008.5

(22) Anmeldetag: 06.01.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 12.01.1998 DE 19800718

(71) Anmelder: ABB RESEARCH LTD.
8050 Zürich (CH)

(72) Erfinder: Dzung, Dacfey, Dr.
5430 Wettingen (CH)

(74) Vertreter: Clerc, Natalia et al
ABB Business Services Ltd,
SLE-I, Intellectual Property
5401 Baden (CH)

(54) **Verfahren zur Kalibrierung einer Sende- und Empfangseinrichtung für Mehrträgersignale**

(57)     Um während einer Mehrfrequenzsynchronisation zusätzlich Nutznachrichten (Dat) von einer Sendeeinrichtung (S) zu einer ‚Empfangseinrichtung (E) übertragen werden können, werden Kalibrierfrequenzen ($f_n$) gemäß: $f_n = n \cdot p \cdot f_G$, mit $f_G = f_A/N$, $f_A$ = Abtastfrequenz eines Digital-Analogwandlers (5) und eines Analog-Digitalwandlers (7), N = Anzahl Abtastwerte eines inversen schnellen Fouriertransformators (3), p = vorgebbarer Faktor > 1, vorzugsweise im Bereich 5 - 10, n = ganzzahlige Laufvariable ≥ 0, verwendet. Für Zwischenfrequenzen zwischen Kalibrierfrequenzen ($f_n$) erfolgt eine Kalibrierung durch eine Interpolation berechneter Werte einer Kanalübertragungsfunktion ($H_n(f_n)$), vorzugsweise durch eine Tiepaßfilterung.

FIG.1

**Beschreibung**

TECHNISCHES GEBIET

Bei der Erfindung wird ausgegangen von einem Verfahren zur Übertragung digitaler Daten nach dem Oberbegriff des Patentanspruchs 1.

STAND DER TECHNIK

Mit dem Oberbegriff des Patentanspruchs 1 nimmt die Erfindung auf einen Stand der Technik Bezug, wie er aus der Veröffentlichung von Jacky S. Chow et al., A Discrete Multitone Transceiver System for HDSL Applications, IEEE JOURNAL ON SELECTED AREAS IN COMMUNICATIONS. Vol. 9, No. 6, August 1991, S. 895 - 908, bekannt ist. Bei dem dort beschriebenen Verfahren zur Kalibrierung bzw. Entzerrung einer Sende- und Empfangseinrichtung mittels mehrerer Kalibrierfrequenzen werden die zu sendenden Daten nach einer inversen Fouriertransformation mit nachfolgender zyklischer Signalergänzung sowie Digital-Analogumwandlung an einen Empfänger gesendet. Dort wird von den empfangenen und ggf. in ihrer Empfangsamplitude und -phase geänderten Signalen die zyklische Signalergänzung wieder entfernt und anschließend eine Fouriertransformation durchgeführt. Die daraus erhaltenen Fouriertransformationskomponenten werden mittels Kalibriersignalen kalibriert und über einen Symboldetektor ausgegeben. Nachteilig dabei ist, daß während der Mehrfrequenzsynchronisation keine Nutzernachrichten übertragen werden können.

Zum einschlägigen Stand der Technik wird zusätzlich auf die Veröffentlichung: Programs for Digital Signal Processing, herausgegeben vom Digital Signal Processing Committee, IEEE Acoustics, Speech, and Signal Processing Society, IEEE Press, 1979, THE INSTITUTE OF ELECTRICAL AND ELECTRONICS ENGINEERS, Inc. 345 East 47 Street, New York, NY 10017, USA, erhältlich über: John Wiley & Sons, Inc., 605 Third Ave, New York, NY 10016, S. 8.1-1 - 8.1-2, verwiesen, in der die Interpolation von Werten durch ein digitales Filter beschrieben ist, wie es bei der vorliegenden Erfindung angewendet werden kann.

Aus der WO 96/02991 A1 ist es bekannt, ein Synchronisationssignal aus Fouriertransformationskomponten eines Empfängereingangspegels und aus Kalibriersignalen eines Sendesignals zu bestimmen.

DARSTELLUNG DER ERFINDUNG

Die Erfindung, wie sie im Patentanspruch 1 definiert ist, löst die Aufgabe, ein Verfahren zur Übertragung digitaler Daten der eingangs genannten Art derart weiterzuentwickeln, daß während der Mehrfrequenzsynchronisation zusätzlich Nutzernachrichten übertragen werden können.

Vorteilhafte Ausgestaltungen der Erfindung sind in den abhängigen Patentansprüchen definiert.

Ein Vorteil der Erfindung besteht darin, daß innerhalb bestimmter Frequenzbereiche immer Nutzernachrichten übertragen werden können.

Gemäß einer vorteilhaften Ausgestaltung der Erfindung können in den Frequenzbereichen zwischen den Kalibrierfrequenzen gute Kalibrierungen durch eine Tiefpaßfilterung erreicht werden.

KURZE BESCHREIBUNG DER ZEICHNUNGEN

Die Erfindung wird nachstehend anhand eines Ausführungsbeispiels erläutert. Es zeigen:

Fig. 1   eine Sende- und Empfängerschaltung für eine Kalibrierung mit mehreren Kalibrierfrequenzen,

Fig. 2   eine Kanalübertragungsfunktion und

Fig. 3   ein Frequenz- Zeitdiagramm zur Erläuterung des erfindungsgemäßen Verfahrens.

WEGE ZUR AUSFÜHRUNG DER ERFINDUNG

In den Figuren sind gleiche Teile mit gleichen Bezugszeichen gekennzeichnet.

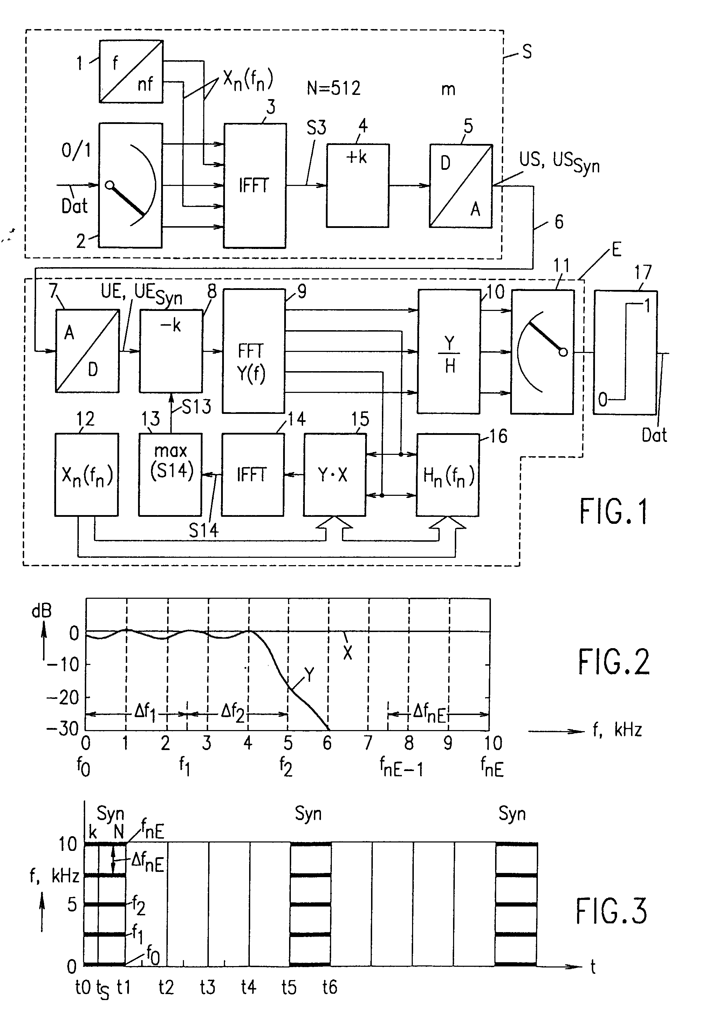

Fig. 1 zeigt eine Sende- und Empfangseinrichtung (S, E) mit einem Sender bzw. einer Sendeeinrichtung (S) und einem Empfänger bzw. einer Empfangseinrichtung (E), welche über einen Übertragungskanal (6) miteinander verbunden sind. Die Sendeeinrichtung (S) weist einen Seriell-Parallelwandler (2) auf, dem eingangsseitig Nutzerinformationen bzw. digitale Nutzerdaten (Dat) in Form von 0/1-Signalen zugeführt werden und der ausgangsseitig über einen inversen schnellen Fouriertransformator (3) mit einem Signalergänzer (4) verbunden ist. Dem Fouriertransformator (3) sind eingangsseitig, während eines Zeitdauerbereiches (Syn) für die Mehrfrequenzsynchronisation zusätzlich Kalibriersignale $X_n(f_n)$ von einem Frequenzvervielfacher (1) mit Einstellungen für eine Kalibriersignalamplitude $(r_n)$ und eine Kalibriersignalphase $(\varphi_n)$ für diese Kalibriersignale $(X_n(f_n))$ zugeführt. Für die Kalibriersignale $(X_n(f_n))$ gilt die Gleichung:

$$X_n(f_n) = r_n \cdot \exp(j\varphi_n).$$

Dabei bezeichnet $f_n$ eine Kalibrierfrequenz und n eine ganzzahlige Laufvariable mit Werten von 0, 1, 2, ... nE, nE = Endwert von n.

Der inverse schnelle Fouriertransformator (3) liefert ausgangsseitig N = 512 Abtastwerte (S3) an den Signalergänzer (4), welcher die letzten k = 64 Abtastwerte (S3) an deren Anfang kopiert, so daß insgesamt 576 Abtastwerte (S3) an einen nachfolgenden Digital-Analogwandler (5) ausgegeben werden, welcher ausgangsseitig mit dem Übertragungskanal (6) verbunden ist.

Die Empfangseinrichtung (E) weist eingangsseitig einen an den Übertragungskanal (6) angeschlossenen Analog-Digitalwandler (7) auf, welcher ausgangsseitig über einen Signalreduzierer (8) mit einem schnellen Fouriertransformator (9) verbunden ist. Der Signalreduzierer (8) entfernt die im Signalergänzer (4) zugefügten $k = 64$ Abtastwerte (S3) wieder aus der Folge der Abtastwerte. Der schnelle Fouriertransformator (9) liefert ausgangsseitig Fouriertransformationskomponenten (Y(f)) an einen Kalibrierer (10), ferner an einen Korrelator (15) und an einen Funktionsbildner (16) für eine Kanalübertragungsfunktion $H_n(f_n)$. Ein Datenspeicher (12), in dem dieselben Kalibriersignalgrößen $(X_n(f_n))$ gespeichert sind, wie sie vom Ausgang des Frequenzvervielfachers (1) abgegeben werden, steht ausgangsseitig mit Signaleingängen des Multiplizierers (15) und des Funktionsbildners für die Kanalübertragungsfunktion (16) in Verbindung. Im Multiplizierer (15) werden die Fouriertransformationskomponenten (Y(f)) mit den Kalibriersignalgrößen $(X_n(f_n))$ multiplikativ verknüpft und an einen inversen schnellen Fouriertransformator (14) ausgegeben. Dessen Abtastwerte (S14) werden einem Maximalwertdetektor (13) zugeführt, der unter den 512 Abtastwerten (S14) denjenigen mit der maximalen Kalibriersignalamplitude $(r'_n)$ ermittelt und als Synchronisationsausgangssignal (S13) einen Synchronisationszeitpunkt $(t_S)$, d. h. die zeitliche Position dieses Maximalwertsignals, an den Signalreduzierer (8) ausgibt. Dieses Synchronisationsausgangssignal (S13) wird in dem Signalreduzierer (8) zur Synchronisierung verwendet, d. h., zur Bestimmung von Synchronisationszeitpunkten $(t_S)$, vgl. Fig. 3.

Der Frequenzvervielfacher (1) arbeitet mit einer Grundfrequenz $f_G$ von 40 Hz, gemäß $f_G = f_A/N$, wobei $f_A$ die Abtastfrequenz von z. B. 20 kHz des Digital-Analogwandlers (5) und des Analog-Digitalwandlers (7) ist. Für die Kalibrierfrequenz $f_n$ gilt die Gleichung:

$$f_n = n \cdot p \cdot f_G,$$

wobei p ein vorgebbarer Faktor > 1 ist, insbesondere im Bereich von 2 - 100, vorzugsweise im Bereich von 5 - 10 gewählt wird.

Die Kanalübertragungsfunktion $(H_n(f_n))$ wird in dem Funktionsbildner (16) zuerst für die Kalibrierfrequenzen $(f_n)$ berechnet gemäß:

$$H_n(f_n) = Y_{nSyn}(f_n)/X_n(f_n),$$

wobei $Y_{nSyn}(f_n)$ die fouriertransformierte Größe des Empfängersynchronisationssignals $(UE_{Syn})$ ist.

Für Frequenzen (f) zwischen den Kalibrierfrequenzen $(f_n)$, insbesondere für Zwischenfrequenzen $f_m = m \cdot f_G$, m = 1, 2, ... ganzzahlig, wird eine Kanalübertragungsfunktion $(H_m(f_m))$ im Kalibrierer (10) durch Interpolation, vorzugsweise mittels eines digitalen Filters, aus den im Funktionsbildner (16) berechneten Werten der Kanalübertragungsfunktion $(H_n(f_n))$ ermittelt und gespeichert. Eine bevorzugte Interpolation verfährt wie folgt:

1. Einfügen von jeweils p - 1 Nullen in die Folge der Werte der Kanalübertragungsfunktion $(H_m(f_m))$. Die entstandene folge wird $Z(m)$ genannt.
2. Bestimmen eines Tiefpaßfilters mit der Grenzfrequenz von 0,5 Hz, z. B. nach dem Verfahren der eingangs genannten Veröffentlichung in: IEEE Press. Dies liefert $2 \cdot L + 1$ Koeffizienten $h(l)$ eines digitalen Filters mit $L = 4 \cdot p$, l = Laufvariable.
3. Mit den gemäß den Punkten 1 und 2 bestimmten Werten erhält man die gesuchte Folge der Kanalübertragungsfunktion

$$H_m(f_m) = \sum_{l=-L}^{L} h(l) \cdot Z(m - l).$$

Damit stehen im Kalibrierer (10) Kalibrierwerte für alle benötigten Frequenzen (f) zur Verfügung. Mittels der Kanalübertragungsfunktionen $(H_n(f_n))$ und $(H_m(f_m))$ können am Ausgang des Analog-Digitalwandlers (7) erfaßte Empfängereingangssignale (UE) auf den gleichen Wert von Senderausgangssignalen (US) am Ausgang des Digital-Analogwandlers (5) gebracht werden. Die kalibrierten Ausgangssignale des Kalibrierers (10) werden einem Parallel-Seriellwandler (11) zugeführt, der ausgangsseitig über einen Dekodierer (17) Nutzerdaten (Dat) abgibt, welche mit denen am Eingang des Seriell-Parallelwandlers (2) übereinstimmen, was das Ziel des Abgleichs ist.

Fig. 2 zeigt eine Prinzipdarstellung der Frequenzabhängigkeit der Fouriertransformationskomponenten (Y(f)) des Empfängereingangssignals (UE) mit Bezug auf Fouriertransformationskomponenten (X(f)) des Senderausgangssignals (US), wobei auf der Abszisse die Frequenz (f) in kHz und auf der Ordinate der Leistungspegel in dB aufgetragen sind. Die Kalibrierfrequenzen $(f_n)$ sind mit $(f_1)$, $(f_2)$, $(f_{nE-1})$ und $(f_{nE})$ bezeichnet. Mit $(\Delta f_1)$, $(\Delta f_2)$, $(\Delta f_{nE})$ sind Frequenzabstände zwischen Kalibrierfrequenzen $(f_n)$ bezeichnet, die vorzugsweise äquidistant sind.

Fig. 3 zeigt in einer Prinzipdarstellung eine Zeit-Frequenzabhängigkeit der Datenübertragung von Synchronisations- und Nutzerdaten. In dem Zeitdauerbereich (Syn) für die Mehrfrequenzsynchronisation werden Kalibriersignale mit Kalibrierfrequenzen $(f_n)$, z. B. $(f_1)$, $(f_2)$ und $(f_{nE})$, sowie gleichzeitig in den Frequenzintervallen, z. B. $(\Delta f_{nE})$, Nutzerdaten (Dat) übertragen. In einem 1. ,Zeitabschnitt zwischen Zeitpunkten (t0) und $(t_S)$ werden die k in dem Signalergänzer (4) zugefügten Abtastwerte und danach zwischen Zeitpunkten $(t_S)$ und (t2) die N Abtastwerte vom Ausgang des inversen schnellen Fouriertransformators (3) gesendet. Zwischen Zeitpunkten (t1) - (t2), (t2) - (t3), (t3) - (t4) und (t4) - (t5), in welchen von der Sendeeinrichtung (S) keine Kalibriersignale ($X_n(f_n)$) gesendet werden, können Nutzerdaten (Dat) übertragen werden. In diesen Nutzerintervallen werden die Synchronisationszeitpunkte ($t_S$) nicht detektiert, sondern auf Grund von Synchronisationszeitpunkten ($t_S$) während der Zeitdauerbereiche (Syn) für die Mehrfrequenzsynchronisation berechnet.

Bei Bedarf können andere Werte für N, k und $f_A$ als die in der Beschreibung verwendeten gwählt werden.

BEZEICHNUNGSLISTE

| | |
|---|---|
| 1 | Frequenzvervielfacher mit Amplituden- und Phaseneinstellungen für Kalibriersignale $X_n(f_n)$ |
| 2 | Seriell-Parallelwandler |
| 3, 14 | Inverse schnelle Fouriertransformatoren |
| 4 | Signalergänzer für Ausgangssignale von 3 |
| 5 | Digital-Analogwandler |
| 6 | Übertragunskanal |
| 7 | Analog-Digitalwandler |
| 8 | Signalreduzierer für Ausgangssignale von 7 |
| 9 | Schneller Fouriertransformator |
| 10 | Dividierer, Kalibrierer |
| 11 | Parallel-Seriellwandler |
| 12 | Datenspeicher für $X_n(f_n)$ |
| 13 | Maximalwertdetektor |
| 15 | Multiplizierer, Korrelator |
| 16 | Funktionsbildner für die Kanalübertragungsfunktion H |
| 17 | Dekodierer |
| | |
| Dat | Nutzerdaten, Nutzerinformation |
| E | Empfänger, Empfangseinrichtung |
| f | Frequenz |
| $f_A$ | Abtastfrequenz von 5 und 7 |
| $f_n$, $f_0$ - $f_{nE}$ | Kalibrierfrequenzen |
| $f_G$ | Grundfrequenz |
| $H_n(f_n)$ | Kanalübertragungsfunktion |
| k | Anzahl Ergänzungsabtastwerte |
| m, l | Laufvariable |
| n | Laufvariable von 0 - nE |
| nE | Endwert von n |
| N | Anzahl Abtastwerte in 3 |
| S | Sender, Sendeeinrichtung |
| Syn | Zeitdauerbereich für die Mehrfrequenzsynchronisation |
| S3, S14 | Ausgangssignale von 3 bzw. 14 |
| S13 | Synchronisationsausgangssignal |
| t | Zeit |

| | |
|---|---|
| $t_S$ | Synchronisationszeitpunkt |
| t0 - t6 | Zeitpunkte |
| UE | Empfängersignal |
| $UE_{Syn}$ | Empfängersignal bei Syn |
| US | Sendersignal |
| $US_{Syn}$ | Sendersignal bei Syn |
| $X_n(f_n)$ | Kalibriersignale, für welche eine Korrelation durchgeführt wird, Fouriertransformierte von US |
| Y(f) | Ausgangssignale von 9, Fouriertransformationskomponenten von UE |
| $Y_{nSyn}(f_n)$ | Fouriertransformationskomponenten von $UE_{Syn}$ |
| $\Delta f_1$ - $\Delta f_{nE}$ | Frequenzabstände zwischen Kalibrierfrequenzen $f_n$ |

**Patentansprüche**

1. Verfahren zur Übertragung digitaler Daten von einer Sendeeinrichtung (S) zu einer Empfangseinrichtung (E),

a) wobei eine Kalibrierung eines Empfängereingangssignals (UE) mit Bezug auf ein Senderausgangssignal(US) mittels mehrerer Kalibrierfrequenzen $f_n$ durchgeführt wird,
b) wobei von der Sendeeinrichtung (S) Nutzerdaten (Dat) und Kalibriersignale ($X_n(f_n)$) übertragen werden, dadurch gekennzeichnet,
c) daß die Kalibrierfrequenzen gemäß:

$$f_n = n \cdot p \cdot f_G$$

gewählt werden, mit $f_G = f_A/N$, $f_A$ = Abtastfrequenz eines Digital-Analogwandlers (5) und eines Analog-Digitalwandlers (7), N = Anzahl Abtastwerte eines inversen schnellen Fouriertransformators (3), p = vorgebbarer Faktor > 1, n = ganzzahlige Laufvariable ≥ 0.

2. Verfahren nach Anspruch 1, dadurch gekennzeichnet, daß 5 ≤ p ≤ 10 ist.

3. Verfahren nach einem der vorhergehenden Ansprüche, dadurch gekennzeichnet, daß für Zwischenfrequenzen ($f_m$) zwischen Kalibrierfrequenzen ($f_n$) eine Kanalübertragungsfunktion ($H_m(f_m)$)) durch eine Interpolation berechneter Werte einer Kanalübertragungsfunktion ($H_n(f_n)$) gebildet werden.

4. Verfahren nach Anspruch 4, dadurch gekennzeichnet, daß die Interpolation durch eine Tiefpaßfilterung erfolgt.

5. Verfahren nach einem der vorhergehenden Ansprüche, dadurch gekennzeichnet, daß eine empfängerseitige Synchronisation nur mit senderseitigen Kalibrierfrequenzen ($f_n$) vorgenommen wird.

FIG.1

FIG.2

FIG.3